## Europäisches Patentamt
## European Patent Office
## Office européen des brevets

(19)

(11) Publication number: **0 224 992**
**B1**

(12)

# EUROPEAN PATENT SPECIFICATION

(45) Date of publication of the patent specification:
27.06.90

(51) Int. Cl.⁵: **C10G 11/05, B01J 29/08**

(21) Application number: **86306732.8**

(22) Date of filing: **01.09.86**

(54) FCC catalysts of increased effective heat capacity.

(30) Priority: 30.08.85 US 771334
11.07.86 US 884577

(43) Date of publication of application:
10.06.87 Bulletin 87/24

(45) Publication of the grant of the patent:
27.06.90 Bulletin 90/26

(84) Designated Contracting States:
AT BE CH DE FR GB IT LI LU NL SE

(56) References cited:
EP-A- 0 023 802
GB-A- 1 459 953
GB-A- 2 014 468

(73) Proprietor: ENGELHARD CORPORATION, Menlo Park,
CN 40, Edison New Jersey 08818(US)

(72) Inventor: Hayward, Chi-Mi-Tai, 317 Glenn Avenue,
Lawrenceville New Jersey(US)
Inventor: Speronello, Barry K., 283 Manning Avenue,
River Edge New Jersey(US)
Inventor: Gustafson, William R., 91 Hickory Lane,
Lincroft New Jersey(US)
Inventor: Koermer, Gerald S., 496 Mountain Avenue,
Springfield New Jersey(US)

(74) Representative: Geering, Keith Edwin et al, REDDIE &
GROSE 16 Theobalds Road, London WC1X 8PL(GB)

ACTORUM AG

## Description

Fluid catalytic cracking is central to modern petroleum refineries. Zeolite containing cracking catalysts efficiently convert less valuable long chain hydrocarbons to more valuable shorter molecules. In many cases, the production of an entire refinery complex is controlled by its Fluid Catalytic Cracking (FCC) unit. In many cases, it would be desirable to increase the profitability of the FCC unit by some means such as increasing the reactor temperature as this would normally lead to increased conversion and cracked products of higher octane, or by the processing of lower quality, less costly feedstocks. However, both increased conversion and the processing of lower quality feedstocks can lead to an unacceptably high temperature within the regenerator. Thus, the production of the FCC unit and in turn, the refinery, is often limited by the maximum temperature that the construction of the regenerator can tolerate. Therefore, it is desirable to obtain methods of increasing the FCC unit profitability without unduly increasing regenerator temperature.

The method and catalyst compositions of the present invention provide for catalytic cracking with improved yields at a constant regenerator temperature and may be used with any conventional zeolitic cracking catalyst but are exceptionally well suited for use with high zeolite catalysts such as those disclosed in U.S. 4 493 902.

The present invention provides a catalytic composition for use in fluid catalytic cracking comprising FCC catalyst and component of higher heat retentiveness such that the composition has heat capacity of at least 1214 J/Kg °K (0.29 BTU/lb.°F) over the range from 510–705°C (95–1300°F), preferably 510–870°C (950 to 1600°F).

According to the present invention, regenerator temperature is controlled by incorporating a heat retention component in the catalyst composition. The high heat capacity component may be incorporated into the matrix of the zeolite containing particles; it may be present as separate particles circulating with the zeolite containing particles. In many circumstances, it is advantageous to incorporate the heat capacity increasing component in the matrix of the zeolite containing particles as well as to include separate particles with high heat capacity. There are three primary requirements for the high heat capacity component: it must not destroy zeolite too rapidly, it must not result in unacceptably high selectivity to coke and light gaseous products or low selectivity to gasoline, and its effective heat capacity must be in excess of 1214 J/kg.°K (0.29 BTU/lb.°F) at 510–705°C (950–1300°F), between the reactor temperature of 510°C (about 950°F) and the regenerator temperature of 705°C (about 1300°F). In many cases, it will be advantageous to use a material which upon heating undergoes an endothermic reversible phase change between the reactor temperature and the regenerator temperature. Further, many materials which tend to destroy zeolite too rapidly may be incorporated into non-zeolite containing particles in the catalytic composition by coating the material with a protective material which prevents or delays the interaction between the zeolite and the heat retention material. Similarly, zeolite deactivating materials may be incorporated into the matrix of zeolite containing particles if suitable passivating components are also included.

The preferred heat retention components are fluidizable particles consisting essentially of inert compounds, such as the oxides of lithium, beryllium, boron and magnesium as well as carbon containing compounds of these. A preferred heat retention composition is dimagnesium borate ($2MgO \cdot B_2O_3$) containing an excess of MgO over the 54 weight % stoichiometric value to ensure that $B_2O_3$ is immobilized to alleviate interaction with zeolite. This composition is quite inert with respect to zeolite. The incorporation of 2–10% of alumina ($Al_2O_3$) with the dimagnesium borate system stabilizes this material even better. At higher steaming temperatures of >815°C (>1500°F), less zeolite activity loss is obtained using an alumina containing magnesium borate; (e.g. 5% $Al_2O_3$–$2MgO \cdot B_2O_3$) than with pure dimagnesium borate other inert magnesium borate systems include $3MgO \cdot B_2O_3$, 5% $Al_2O_3$–$3MgO \cdot 2B_2O_3$ and $2MgO \cdot B_2O_3 \cdot Al_2O_3$. These compositions contain 32 to 65 weight % MgO, and have an $Al_2O_3$ content of up to 40 weight percent. Another suitable relatively inert compound is boron carbide ($B_4C$). Other suitable but less inert compositions include lithium magnesium borate ($Li_2O \cdot MgO \cdot B_2O_3$) including MgO in excess of the 55 weight % stoichiometric value, lithium aluminates ($Li_2O \, Al_2O_3$) including aluminum oxide in excess of the 80 weight % stoichiometric value, magnesium borate ($MgO \cdot B_2O_3$) containing less MgO than the 54 weight % stoichiometric value and lithium aluminum silicates ($Li_2O \cdot Al_2O_3 \, SiO_2$) containing less lithium oxide than the 20 weight % stoichiometric value. Other suitable compounds which should normally be encapsulated or otherwise passivated include lithium aluminum borate ($2Li_2O \cdot Al_2O_3 \cdot B_2O_3$), lithium magnesium borates including either boron oxide in excess of the 30 weight % stoichiometric value or lithium oxide in excess of the 15 weight % stoichiometric value, lithium aluminates ($Li_2O \cdot Al_2O_3$) containing lithium oxide in excess of the 20 weight % stoichiometric value, lithium aluminum silicates including lithium oxide in excess of the 20 weight % stoichiometric value and boron phosphate ($B_2O_3 \cdot P_2O_5$). While these materials can be used to provide increased heat capacity, it will normally be prudent to encapsulate them with a more inert material such as magnesia or alumina to protect the zeolite from premature deactivation due to interaction with the heat retention component.

The preferred zeolite for incorporation in the compositions of the present invention is zeolite-Y, i.e. faujasite in any of its several catalytically useful embodiments such as ultrastabilized, hydrogen form, rare earth form and the like.

Generally preferred compositions according to the invention include heat retention component selected from dimagnesium borate, alumina stabilized dimagnesium borate containing from about 2 to about 10% alumina, aluminium borate, magnesium tetraborate, magnesium orthoborate, lithium aluminium borate, lithium magnesium borate, lithium aluminium silicate, and lithium aluminate.

One preferred composition according to the invention comprises microspheres containing in situ crystallized Y-faujasite and fluidizable particles of dimagnesium borate (e.g. consisting essentially of from 90 to 98% dimagnesium borate and from 2 to 10% alumina), the weight of the particles containing Y-faujasite preferably being from 15 to 80% of the weight of the total catalytic composition; another comprises microspheres containing Y-faujasite and dimagnesium borate (e.g. alumina stabilized dimagnesium borate containing from 2 to 10% alumina); yet another comprises microspheres containing Y-faujasite and microspheres comprising a core of heat retention material selected from dimagnesium borate, magnesium tetraborate, magnesium orthoborate, lithium aluminium borate, lithium magnesium borate, and lithium aluminate, said core being encapsulated with inert material chosen for example from magnesia, alumina and alumina stabilized dimagnesium borate containing from 2 to 10% alumina.

A further preferred composition according to the invention includes microspheres containing crystallized Y-faujasite, dimagnesium borate (e.g. alumina stabilized dimagnesium borate containing from 2 to 10% alumina), and a minor proportion of ZSM-5 zeolite, said microspheres preferably containing at least 20% by weight Y-faujasite, at least 10% by weight dimagnesium borate, at least 1% by weight ZSM-5 zeolite, balance essentially silica-alumina matrix; another includes microspheres containing crystallized Y-faujasite, alumina stabilized dimagnesium borate containing from 3% to 10% alumina and a minor proportion of ZSM-5 zeolite.

Catalytic cracking using the catalytic compositions of the invention preferably comprises the steps of contacting a petroleum fraction with the catalytic composition, separating the catalytic composition from the fraction and regenerating the catalytic composition by contact with oxygen containing gas at elevated temperature.

Heat balance calculations around the regenerator of FCC units show that increasing the heat capacity of the respective FCC catalyst will reduce the temperature of the catalyst or contact material in the regenerator. While old prior art such as U.S. Patent 2 400 176, E.W. Thiele, (1946) and U.S. Patent 2 462 891, H.D. Noll, (1949) refer to incorporation of heat retention materials into FCC catalysts, they fail to suggest the use of materials having heat capacities substantially in excess of 1130 J/kg.°K (0.27 BTU/lb.°F) nor do they suggest the use of high heat capacity materials which have been encapsulated to protect zeolite used therewith from premature deactivation. Further, this invention is particularly suitable for use with high zeolite content catalysts such as those described in U.S. Patent 4 493 902 (to which attention is directed for detailed information on such catalysts), but the prior art references fail to suggest that the benefits obtained by incorporating "heat retention materials" would be greater for high zeolite content catalysts. Therefore, this invention relates to novel FCC catalysts having effective heat capacities greater than conventional FCC catalysts, i.e. 1130 J/kg.°K (about 0.27 BTU/lb.°F). This invention also relates to a specific method of manufacturing such a catalyst by combining high activity cracking component microspheres with separate microspheres containing a high heat capacity component (e.g. $2MgO \cdot B_2O_3$).

For the purpose of this invention, effective heat capacity (Cpe) of a catalyst is defined as follows:

$$\text{effective catalyst heat capacity (Cpe)} = \frac{\Delta H}{\text{Regen. Temp.} - \text{React. Temp.}}$$

where $\Delta H$ is the enthalpy change of the catalyst between reactor and regenerator temperatures.

This invention, in its broadest sense, concerns novel FCC catalysts having heat capacities greater than conventional FCC catalysts, and the use of such catalysts in FCC units such that they lower the regenerator temperature. Prior art suggested the use of inert high heat capacity materials for heat retention in FCC processes, but the accompanying disclosure indicates that they could not have achieved the results of the present invention because the disclosed materials did not have heat capacities substantially above that of conventional FCC catalysts. For example, the Thiele patent suggested the use of iron or quartz. Iron has a heat capacity 30% lower than FCC catalysts, and quartz has a comparable heat capacity to conventional FCC catalysts.

The present invention also provides for the preparation and use of high heat capacity catalysts (effective heat capacity greater than 1214 J/kg°K) to reduce the regenerator temperature of FCC units.

Ways to achieve this include:

1. Produce FCC catalysts containing substantial amounts of elements having atomic numbers of from 3 to 12, e.g. compounds containing carbon, lithium, beryllium, boron, magnesium, etc.

2. Produce FCC catalysts which undergo a reversible endothermic transformation upon heating from conventional FCC stripping temperature (540°C, about 1000°F) to regenerator temperatures above 595°C (1100°F) such that there is a corresponding exothermic transformation upon cooling from the regenerator temperature to the cracking reactor temperature (from above 595 to 540°C).

Prior art relevant to this invention is disclosed in patents issued to Standard Oil Company (U.S. Patent 2 400 176) and Houdry Process Corporation (U.S. Patent 2 462 891). In both cases, the use of an inert material with high heat capacity for heat retention was proposed. However, the inventors did not anticipate the concept of the present invention, since the heat capacity of the materials claimed in their invention was less than or comparable to conventional FCC catalysts. The fact that these materials do not have a higher heat capacity than silica/alumina indicates that they are not suitable to reduce the regenerator temperature of FCC units.

This invention provides a novel composition of matter for FCC catalysts, i.e. one having an effective heat capacity of at least 1214 J/kg.°K). The process of using this catalyst in FCC units to crack hydrocarbons is also included. For example, two ways to achieve effective heat capacity greater than 1130 J/kg°K are:

1. Produce FCC catalysts containing large amounts of elements having an atomic number of from 3 to 12, e.g. compounds containing carbon, lithium, beryllium, boron, magnesium, and the like either incorporated into the matrix of the zeolite containing particles or incorporated as fluidizable particles physically mixed and circulated with the zeolite containing particles.

2. Produce FCC catalysts materials which undergo a reversible endothermic transformation upon heating from conventional FCC stripping temperature (540°C) to regenerator temperatures (above 595°C) such that there is a corresponding exothermic transformation upon cooling from the regenerator temperature to the cracking reactor temperature (from above 595 to 540°C).

Use of the catalytic compositions of the present invention makes it possible to burn more coke in the regenerator, obtain increased conversion, use a greater throughput of residual fractions and use feeds containing larger amounts of basic nitrogen compounds. The above described catalytic materials can be prepared, for example, by spray drying a high heat capacity component with a zeolite-Y containing component such as pure zeolite-Y. Another method of preparing this material is by blending separate fluidizable particles of a high heat capacity component with a zeolite-Y containing component. Small amounts of ZSM-5 zeolite (e.g. 1–5%) may be included in the catalytic microspheres if desired.

Based on heat balance calculations, a catalyst with high heat capacity is useful for reduction of regenerator temperatures. The measured heat capacity of conventional equilibrium FCC catalysts is 1130 J/kg.°K. For example, a catalyst with a heat capacity of 1214 J/kg.°K will provide 11°C (approximately 20°F) reduction of regenerator temperature, while a catalyst with a heat capacity of 1340 J/kg.°K (0.32 BTU/lb.°F) will produce a 28°C (50°F) reduction in regenerator temperature.

The heat retention components described herein are particularly suitable for use with in situ crystallized Y-Faujasite containing microspheres of the types described in US Patent 4 493 902 even in the presence of metals such as nickel and vanadium as the heat retention component does not unduly aggravate the problems usually associated with the presence of these metals.

Throughout this specification (unless otherwise stated) all heat capacities are as determined using a Setaram 111 Differential Scanning Calorimeter (DSC) calibrated to indicate a value of 1172 J/kg.°K (0.28 BTU/lb.°F) for the heat capacity of synthetic sapphire at 500°C. Alternatively, a DuPont 910 Differential Scanning Calorimeter (DSC) can be used but the Setaram 111 seems to provide the most consistent and meaningful results in the range of 510–705°C.

Example I

The following example describes the preparation and use of a preferred high heat capacity material: 2MgO • B₂O₃.

The 2MgO • B₂O₃ sample was prepared by slurrying a mixture containing a 1:1 mole ratio of Mg(OH)₂ and H₃BO₃ in water, milling, extruding, drying, and then calcining at 980°C (1800°F) for one hour. The resulting solid was ground and washed twice with 20 g of water per gram of solid at a temperature of 90°C for 0.5 to 1 hour to remove any unreacted B₂O₃ present in the product. Wet chemical analysis indicated a magnesia content of 55 weight % and a boron oxide content of 45 weight %.

The measured heat capacity of this 2MgO • B₂O₃ sample is 1549 J/kg.°K (0.37 BTU/lb.°F) at 700°C (1292°F). Based on a measured heat capacity of 1130 J/kg.°K (0.27 BTU/lb.°F) for an equilibrium FCC catalyst, the use of this inert additive at 50 weight % provided a catalyst with a heat capacity of 1340 J/kg.°K heat capacity. Heat capacity measurements were made using two calorimeters, the DuPont 910 Differential Scanning Calorimeter and the Setaram 111 Differential Scanning Calorimeter. The DuPont system is capable of heat capacity measurements up to 700°C, while the Setaram system can be used up to 810°C. At temperatures above 500°C, the Setaram DSC provides more meaningful heat capacity data than the DuPont system. Heat capacity data were obtained using a reference heat capacity of 1130 J/kg.°K at 500°C for Engelhard equilibrium catalysts such als Ultrasiv^R 260, Magnasiv^R 380 and HEZ-55™, and 1172 J/kg.°K at 500°C for synthetic sapphire. Unless otherwise stated, all heat capacity measurements are to be understood to be as measured on the Setaram 111 calibrated to indicate a heat capacity of 1172 J/kg.°K at 500°C for synthetic sapphire throughout this specification. Heat balance calcula-

EP 0 224 992 B1

tions demonstrate that a catalyst with a 1340 J/kg.°K heat capacity, when used in the place of a conventional FCC catalyst, can reduce regenerator temperatures by about 28°C.

The material prepared above was steamed as a blend with microspheres containing a high zeolite-Y content catalyst (prepared as described in Example 1 of U.S.P. 4 493 902, except that only a single rare earth exchange [to a rare earth oxide content of 8%] was carried out after the initial ammonium exchange) in a 1:1 weight ratio. The temperatures used were 730 and 790°C (1350 and 1450°F), using 100% steam at 1 atmosphere for four hours. MAT testing results of the steamed samples are provided below:

| Steaming Temperature | 730°C | 790°C |
|---|---|---|
| Conversion (%) | 87 | 82 |

The same conversions were obtained for samples which contained $2MgO \cdot B_2O_3$ and the high zeolite content catalyst which were steamed individually and then combined for MAT testing. These data indicate that no additional deactivation of zeolite-Y by the $2MgO \cdot B_2O_3$ occurred during steaming.

When the same 1:1 blend described above was steamed at 815°C for 4 hours using 100% steam, a 59% conversion was obtained. Since a 76% conversion was obtained using the control sample, these data indicated some additional deactivation had occurred at the higher steaming temperature. However, better activity retention can be obtained (conversion $\approx$ 66%), if the dimagnesium borate sample is calcined at 1010°C for 4 hours prior to steaming and MAT testing with the zeolite-Y component. However, activity loss in this test can be substantially eliminated if the dimagnesium borate is calcined at 980°C (1800°F) for 8 hours then washed twice as above. When the above test procedure was repeated using catalytic compositions containing dimagnesium borate which had been cleansed of active boron compounds in this fashion, a conversion at 76% was obtained after steaming.

Example II

The following example describes a high heat capacity material which deactivates zeolite-Y and thus should be encapsulated with an inert material for use in this invention.

A $MgO \cdot 2B_2O_3$ sample was prepared by combining a 1:4 mole ratio of $Mg(OH)_2$ and $H_3BO_3$ in water. This mixture was milled, extruded, dried and then calcined at 760°C for one hour. The resulting solid was ground and washed twice with water. The dried solid obtained has a heat capacity of 1465 J/kg.°K (0.35 BTU/lb.°F) at 500°C (932°F) using the DuPont DSC. This material was blended with a high zeolite-Y component as described in Example I in a 1:1 weight ratio and then steamed at 790°C using 100% steam for four hours. MAT testing results showed 6–10% conversion for this sample, which indicated that extensive zeolite deactivation had occurred during steaming. These data indicate that this magnesia deficient system is less suitable for use as a high heat capacity catalyst.

Example III

The following example describes the preparation and use of a preferred high heat capacity material: 5% $Al_2O_3$–$2MgO \cdot B_2O_3$ which 5% $Al_2O_3$–$2MgO \cdot B_2O_3$ sample was prepared by combining 467 g of magnesium hydroxide (8 moles of $Mg(OH)_2$), 495 g of boric acid (8 moles of $H_3BO_3$) and 233 g of aluminum nitrate ($Al(NO_3)_3 \cdot 9H_2O$) in water. This mixture was milled, extruded, dried and then calcined at 2000°F for 8 hours. The solid formed was ground and washed. Wet chemical analysis indicated a magnesium oxide content of 52 weight %, a boron oxide content of 43 weight %, and an alumina content of 5 weight %.

The measured heat capacity of this 5% $Al_2O_3$–$2MgO \cdot B_2O_3$ is 1298 J/kg.°K (0.31 BTU/lb.°F) at 500°C (932°F) and 1549 J/kg.°K (0.37 BTU/lb.°F) at 700°C (1292°F), essentially identical to the $2MgO \cdot B_2O_3$ (example I) heat capacity at this temperature. This alumina containing material was blended with a high zeolite-Y content catalyst as described in Example I in a 1:1 weight ratio. The blended samples were steamed at 790, 815 and 840°C (1450, 1500 and 1550°F) for 4 hours using 100% steam. No activity loss was found for samples steamed at 790 and 815°C, as compared to control references. After steaming at 840°C, the alumina containing magnesium borate sample had a 42% conversion. Since a 45% conversion was obtained for the control sample, these data indicated slight zeolite activity loss (12%) had occurred during steam treatment. However, a magnesium borate sample prepared using the same conditions but containing no alumina exhibited only 38 to 40% conversion (ca. 23% activity loss). In comparison, the 5% alumina sample gave substantially better activity retention, since it led to only about fifty percent as much zeolite activity loss.

Furthermore, a magnesium borate sample containing about 3% alumina gave a 41% conversion under the same steaming conditions. These results demonstrate that incorporating alumina into magnesium borate provides a more stable heat retention component.

5

Examples IV–VI

Three additional high heat capacity systems were prepared having compositions as set forth in Table I using the procedures outlined in Example III then subsequently tested as set forth above after steaming at 840°C the results being as set forth in Table I which also sets forth the starting materials used for each preparation, the quantity of reactants used, measured heat capacities and the MAT conversions obtained after steam deactivation with the high zeolite content catalyst are provided in the above table. These additives also provided improved zeolite activity retention comparable to that of the 5% $Al_2O_3$–2MgO $\cdot$ $B_2O_3$ additive described in Example III but provided somewhat lower heat capacity.

Table I

| Example | Comp. | Reactants | | | Measured | |
|---|---|---|---|---|---|---|
| | | $Mg(OH)_2$ (g) | $H_3BO_3$ (g) | $AlX_3$ | Cp | MAT+ |
| IV | $3MgO \cdot B_2O_3$ | 525 | 371 | – | 1256 | 40 |
| V | 5% $Al_2O_3$-$3MgO \cdot B_2O_3$ | 525 | 371 | 221** | 1256 | 42.5 |
| VI | $2MgO \cdot B_2O_3 \cdot Al_2O_3$ | 292 | 309 | 390## | 1214 | 40 |

** X = nitrate ($NO_3^-$)
## X = hydroxide ($OH^-$)
   Cp in J/kg °K at 500°C (932°F)
+ Conversion (%)

Example VII–X

The following data illustrate the metals tolerance profile of various high heat capacity catalyst samples at 1000 ppm Ni and 2000 ppm V level. These results show that, in the presence of nickel and vanadium contaminants, good activity retention was obtained after steaming of the combination as described in Example I and the heat retention compounds of the present invention of high zeolite content catalyst.

The testing procedures used were as developed by Mitchell (see Ind. Eng. Chem., Prod. Res. Dev., volume 19, page 209 (1980)). All catalyst components were impregnated with 1000 ppm Ni and 2000 ppm V as described therein. MAT conversion results were obtained after the blended sample was steam deactivated at 790°C for 4 hours using 90% steam and 10% air. Results obtained are set forth in Table II.

Table II

| Example | Wt% Additive | Conversion (%) |
|---|---|---|
| VII | 60% $2.5MgO \cdot B_2O_3$ | 78 |
| VIII | 60% 5%$Al_2O_3$–$2MgO \cdot B_2O_3$ | 69 |
| IX | 60% $2MgO \cdot B_2O_3$ | 65 |
| X | 40% 5%$Al_2O_3$–$2MgO \cdot B_2O_3$ + 20% VCA | 74 |

Note:

Additives (including heat retention components) were impregnated with 1000 ppm Ni and 2000 ppm V. All blends contained 40 weight percent of the high zeolite content catalyst impregnated with 1000 ppm Ni and 200 ppm V. $2.5MgO \cdot B_2O_3$ was composed of 60 weight percent MgO and 40 weight percent $B_2O_3$. VCA = vanadium control additive comprising Magnesia (20% by weight) incorporated into calcined kaolin microspheres.

Since the control reference (obtained by steaming the metals impregnated high zeolite content catalyst then blended with steamed magnesium borate in a 40 to 60 weight ratio) gave a 75% conversion, the above results demonstrate that at the 1000 ppm Ni and 2000 ppm V level, zeolite activity can be maintained even while using the various high heat capacity components of the present invention in combination with high zeolite content catalysts in the presence of these metals at these concentrations.

**Claims**

1. A catalytic composition for use in fluid catalytic cracking comprising FCC catalyst and component of higher heat retentiveness such that the composition has a heat capacity of at least 1214 J/Kg °K (0.29 BTU/lb.°F) over the range from 510–705°C (950–1300°F).

2. A catalytic composition according to claim 1 comprising microspheres containing in situ crystallized X-faujasite and fluidizable particles of dimagnesium borate (e.g. consisting essentially of from 90 to 98% dimagnesium borate and from 2 to 10% alumina), the weight of the particles containing Y-faujasite preferably being from 15 to 80% of the weight of the total catalytic composition.

3. A catalytic composition according to claim 1 including component of higher heat retentiveness selected from dimagnesium borate, alumina stabilized dimagnesium borate containing from 2 to 10% alumina, aluminium borate, magnesium tetraborate, magnesium orthoborate, lithium aluminium borate, lithium magnesium borate, lithium aluminium silicate, and lithium aluminate.

4. A catalytic composition according to claim 1 containing lithium aluminate as component of higher heat retentiveness.

5. A catalytic composition according to claim 1 comprising microspheres containing Y-faujasite and dimagnesium borate (e.g. alumina stabilized dimagnesium borate containing from 2 to 10% alumina).

6. A catalytic composition according to claim 1 comprising microspheres containing Y-faujasite and microspheres comprising a core of higher heat retentiveness material selected from dimagnesium borate, magnesium tetraborate, magnesium orthoborate, lithium aluminium borate, lithium magnesium borate, and lithium aluminate, said core being encapsulated with inert material chosen for example from magnesia, alumina and alumina stabilized dimagnesium borate containing from 2 to 10% alumina.

7. A catalytic composition according to claim 1 including microspheres containing crystallized Y-faujasite, dimagnesium borate (e.g. alumina stabilized dimagnesium borate containing from 2 to 10% alumina) and a minor proportion of ZSM-5 zeolite, said microspheres preferably containing at least 20% by weight Y-faujasite, at least 10% by weight dimagnesium borate, at least 1% by weight ZSM-5 zeolite, balance essentially silica-alumina matrix.

8. A catalytic composition according to claim 1 including microspheres containing crystallized Y-faujasite, alumina stabilized dimagnesium borate containing from 3% to 10% alumina and a minor proportion of ZSM-5 zeolite.

9. A method of fluidized catalytic cracking using a catalytic composition according to any of claims 1 to 8.

10. A method according to claim 9 comprising the steps of contacting a petroleum fraction with the catalytic composition, separating the catalytic composition from the fraction and regenerating the catalytic composition by contact with oxygen containing gas at elevated temperature.

## Patentansprüche

1. Katalytische Zusammensetzung zur Verwendung beim fluiden katalytischen Kracken, welche einen FCC-Katalysator und eine Komponente mit höherem Wärmerückhaltevermögen umfaßt, so daß die Zusammensetzung eine Wärmekapazität von wenigstens 1214 J/kg °K (0,29 BTU/lb. °F) über einen Bereich von 510 - 705 °C (950–1300 °F) hat.

2. Katalytische Zusammensetzung nach Anspruch 1, welche Mikrosphären umfaßt, die in situ kristallisierten Y-Faujasit und fluidisierbare Dimagnesiumboratteilchen (z.B. im wesentlichen aus 90 - 98 % Dimagnesiumborat und 2 bis 10 % Aluminiumoxid bestehend) enthält, wobei das Gewicht der Y-Faujasit enthaltenden Teilchen 15 - 80 % des Gewichts der gesamten katalytischen Zusammensetzung ausmacht.

3. Katalytische Zusammensetzung nach Anspruch 1, welche eine Komponente mit höherem Wärmerückhaltevermögen, ausgewählt aus Dimagnesiumborat, mit Aluminiumoxid stabilisiertem Dimagnesiumborat mit 2 bis 10 % Aluminiumoxid, Aluminiumborat, Magnesiumtetraborat, Magnesiumorthoborat, Lithiumaluminiumborat, Lithiummagnesiumborat, Lithiumaluminiumsilikat und Lithiumaluminat, enthält.

4. Katalytische Zusammensetzung nach Anspruch 1, welche Lithiumaluminat als Komponente mit höherem Wärmerückhaltevermögen enthält.

5. Katalytische Zusammensetzung nach Anspruch 1, welche Mikrosphären umfaßt, die Y-Faujasit und Dimagnesiumborat (z.B. mit Aluminiumoxid stabilisiertes Dimagnesiumborat mit 2 bis 10 % Aluminiumoxid) enthalten.

6. Katalytische Zusammensetzung nach Anspruch 1, welche Y-Faujasit enthaltende Mikrosphären und Mikrosphären, die einen Kern aus einem Material mit höherem Wärmerückhaltevermögen, ausgewäht aus Dimagnesiumborat, Magnesiumtetraborat, Magnesiumorthoborat, Lithiumaluminiumborat, Lithiummagnesiumborat und Lithiumaluminat, enthalten, umfaßt, wobei der Kern mit inertem Material, ausgewählt aus beispielsweise Magnesiumoxid, Aluminiumoxid und mit Aluminiumoxid stabilisiertem Dimagnesiumborat mit 2 bis 10 % Aluminiumoxid, eingeschlossen ist.

7. Katalytische Zusammensetzung nach Anspruch 1, welche Mikrosphären einschließt, die kristallisierten Y-Faujasit, Dimagnesiumborat (z.B. mit Aluminiumoxid stabilisiertes Dimagnesiumborat mit 2 bis 10 % Aluminiumoxid) und einen kleineren Anteil ZSM-5-Zeolith enthalten, wobei die Mikrosphären vorzugsweise wenigstens 20 Gewichts-% Y-Faujasit, wenigstens 10 Gewichts-% Dimagnesiumborat, wenigstens 1 Gewichts-% ZSM-5-Zeolith enthalten und die Differenz im wesentlichen Siliciumdioxid-Aluminiumoxid-Matrix ist.

8. Katalytische Zusammensetzung nach Anspruch 1, welche Mikrosphären einschließt, die kristallisierten Y-Faujasit, mit Aluminiumoxid stabilisiertes Dimagnesiumborat mit 3 - 10 % Aluminiumoxid und einen kleineren Anteil ZSM-5-Zeolith enthalten.

EP 0 224 992 B1

9. Verfahren zum fluiden katalytischen Kracken unter Verwendung einer katalytischen Zusammensetzung nach einem der Ansprüche 1 bis 8.

10. Verfahren nach Anspruch 9, welches als Stufen das Inberührungbringen einer Petroleumfraktion mit der katalytischen Zusammensetzung, das Abtrennen der katalytischen Zusammensetzung von der Fraktion und das Regenerieren der katalytischen Zusammensetzung durch Kontakt mit sauerstoffhaltigem Gas bei erhöhter Temperatur umfaßt.

**Revendications**

1. Une composition catalytique utile dans le craquage catalytique fluide comprenant un catalyseur de CCF et un composant de rétentivité thermique supérieure, si bien que la composition a une capacité thermique d'au moins 1214 J/kg°K (0,29 BTU/Lb.°F) dans la gamme de 510 à 705°C (950 à 1300°F).

2. Une composition catalytique selon la revendication 1 comprenant des microsphères contenant de la faujasite Y cristallisée in situ et des particules fluidisables de borate de dimagnésium (par exemple constituées essentiellement de 90 à 98% de borate de dimagnésium et de 2 à 10% d'alumine), le poids des particules contenant de la faujasite Y étant de préférence de 15 à 80% du poids de la composition catalytique totale.

3. Une composition catalytique selon la revendication 1 comprenant un composant de rétentivité thermique supérieure choisi parmi le borate de dimagnésium, le borate de dimagnésium stabilisé avec de l'alumine contenant de 2 à 10% d'alumine, le borate d'aluminium, le tétraborate de magnésium, l'orthoborate de magnésium, le borate de lithium et d'aluminium, le borate de lithium et de magnésium, le silicate de lithium et d'aluminium et l'aluminate de lithium.

4. Une composition catalytique selon la revendication 1 contenant de l'aluminate de lithium comme composant de rétentivité thermique supérieure.

5. Une composition catalytique selon la revendication 1 comprenant des microsphères contenant de la faujasite Y et du borate de dimagnésium (par exemple du borate de dimagnésium stabilisé avec de l'alumine contenant de 2 à 10% d'alumine).

6. Une composition catalytique selon la revendication 1 comprenant des microsphères contenant de la faujasite Y et des microsphères contenant un noyau d'une matière de rétentivité thermique supérieure choisi parmi le borate de dimagnésium, le tétraborate de magnésium, l'orthoborate de magnésium, le borate de lithium et d'aluminium, le borate de lithium et de magnésium et l'aluminate de lithium, ledit noyau étant encapsulé avec une matière inerte choisie par exemple parmi la magnésie, l'alumine et le borate de dimagnésium stabilisé avec de l'alumine contenant de 2 à 10% d'alumine.

7. Une composition catalytique selon la revendication 1 comprenant des microsphères contenant de la faujasite Y cristallisée, du borate de dimagnésium (par exemple, du borate de dimagnésium stabilisé avec de l'alumine contenant 2 à 10% d'alumine) et une proportion mineure de zéolite ZSM-5, lesdites microsphères contenant de préférence au moins 20% en poids de faujasite Y, au moins 10% en poids de borate de dimagnésium, au moins 1% en poids de zéolite ZSM-5, le complément étant essentiellement une matrice de silice-alumine.

8. Une composition catalytique selon la revendication 1 comprenant des microsphères contenant de la faujasite Y cristallisée, du borate de dimagnésium stabilisé avec de l'alumine contenant de 3% à 10% d'alumine et une proportion mineure de zéolite ZSM-5.

9. Un procédé de craquage catalytique fluide utilisant une composition catalytique selon l'une quelconque des revendications 1 à 8.

10. Un procédé selon la revendication 9 comprenant les étapes de contact d'une fraction de pétrole avec la composition catalytique, séparation de la composition catalytique d'avec la fraction et régénération de la composition catalytique par contact avec un gaz contenant de l'oxygène à température élevée.

8